# EUROPEAN PATENT APPLICATION

(11) **EP 2 009 280 A1**
(43) Date of publication of application: **31.12.2008**
(21) Application number: 07012347.6
(22) Date of filing: 25.06.2007
(51) Int. Cl.: F03D 3/00, F03D 3/06, F03D 7/06

(54) **Vertical axis windmill with wingletted air-tiltable blades**

(71) Applicant: Seven Stars Worldwide Limited, Taipei 104 (TW)
(72) Inventor: Kuo, Wen-Chung, Taipei 104 (TW); Hsiao, Ting-Hao, Taipei 104 (TW); Chao, Yu-Ian, Taipei 104 (TW); Hu, Chia-Nan, Taipei 104 (TW); Griffin, Mark William, Taipei 104 (TW)
(74) Representative: Horak, Michael

(57) **Abstract**

A vertical axis windmill includes a generator, a shaft mounted to the generator, and a plurality of blade sets. The blade set includes a blade rod rotatably connected to the shaft and carrying blades arranged on opposite sides of the shaft. Each blade is divided into first and second moment-inducing sections located on opposite sides of the blade rod. The first moment-inducing section is greater in area than the second moment-inducing section. Each blade is provided, at a predetermined location thereof, with a winglet. Stops for limiting swiveling of the blade are arranged on the blade set. When the blade set is moved so that the blades thereof are located in a windward position and a leeward position respectively, the blades are automatically and easily set at an optimum pressure-receiving condition and a least wind-resistance condition respectively, for receiving wind energy from variable directions.

## Description

### BACKGROUND OF THE INVENTION

### 1. Field of the Invention

The present invention relates to a vertical axis windmill with wingletted air-tiltable blades, and in particular to a vertical axis windmill that employs aerodynamic force to tilt or swivel the angle of the blades such that the blades are automatically set in a windward position to receive wind energy from variable directions so as to cause the shaft to drive a power generator even with a low wind speed (approximately 1-2m/s) and thereby realize optimum power generation performance, where the blade structure and configuration is not complicated, hence reducing the manufacturing costs thereof.

### 2. The Related Arts

Due to the increasing consumption of fossil fuel, reserves of fossil fuel are gradually getting depleted and increasing levels of carbon dioxide are causing a severe "greenhouse" phenomenon in the Earth's atmosphere. Thus, the United Nations has issued regulations and commands and is coordinating the fight against global warming. Recently, all nations around the world have put a lot of effort into developing renewable energies, among which wind energy is one of the best. This is simply because wind power stations do not generate any carbon dioxide emissions and have absolutely no risk of nuclear pollution.

Electrical power is considered "advanced" energy and has an extremely wide range of applications. Electricity is also the foundation of modem civilization, and is a must for modem society.

The known horizontal axis wind power station usually needs a tower as high as 50 meters, which carries a generator and a blade assembly that drives the generator at the top thereof. This makes the tower very bulky, costly and difficult to maintain. Thus, the known construction of the horizontal axis windmill is apparently not an ideal solution for wind power stations.

Prior references discussing or disclosing windmill power generation include, for example, US Patent Nos. 4,496,283; 384,232; 440,266; 505,736; 685,774; 830,917; 1,076,713; 4,534,703; 4,679,985; 4,818,180; 5,256,034; 4,220,870; 7,118,344; 6,749,399; 963,359; 5,269,647; 6,000,907; 6,537,018; 5,083,902; 6,749,393; 863,715; 4,509,899; 4,421,458; 6,726,439; 5,195,871; and 4,245,958, but are not limited thereto. These known references share at least the following drawbacks:
(1) The construction is complicated and assembly is difficult, both leading to increased costs;
(2) Swiveling or tilting of the blades to face the direction of the incoming airflow is not carried out by aerodynamic force, so an additional device for swiveling or tilting the blades is needed, such as a wind vane coupled to the blades by a transmission mechanism; and
(3) The design of the structure is poor because a huge initial driving force is needed to swivel the blades to face the wind direction, such that the blade cannot be properly swiveled in low wind speed conditions, leading to low power generation efficiency.

Other prior references are also known, including US Patent Nos. 3,995,170; 6,688,842; and 6,749,394, none of which discloses effective use of the aerodynamic force, and all having the following drawbacks:
(1) All the blades are individually arranged in a vertical state, and are not interconnected to facilitate swiveling thereof (the blades of US Patent No. 3,995,170 are interconnected, but a transmission mechanism is needed for the interconnection), so that the initial driving force for swiveling the blades is huge;
(2) The blades have to be swiveled (by an angle of as much as 180 degrees) to face the wind direction by a huge initial driving force so that the blades cannot be swiveled in low wind speed conditions, leading to poor power generation efficiency; and
(3) The blades are not of a design or construction good enough to facilitate swiveling of the blades with a small initial driving force.

Further prior references, such as US Patent No. 4,383,801, uses a large wind vane to facilitate swiveling of blade via a cam. This known device has at least the following drawbacks:
(1) The construction is complicated and assembly is difficult, both leading to an increase of costs; and
(2) The swiveling of the blades is driven by mechanical transmission, so that the initial driving force for swiveling the blades is huge and the blades cannot be swiveled in low wind speed conditions, leading to poor power generation efficiency.

Further references, such as Chinese Patent No. 96120092.8, disclose a blade swiveling system that uses a wind vane to track the wind direction and issue an electronic signal to control a servo motor which swivels the blades, but the blades have to be driven all the way by the servo motor, leading to consumption of electrical power and increased risk of breakdown caused by undesired influences on the electronic components by the temperature and/or humidity of surrounding air. In addition, the motor is mounted on a rotary member and a rotary joint has to be established to transmit electrical power, leading to high risk of failure.

Thus, the known technology/devices are not good enough. The present inventor has devoted time and energy to the development of the windmill with experiments and tests. The present invention is therefore aimed at solving and/or alleviating the drawbacks of the known devices by providing a vertical axis windmill with wingletted air-tiltable blades.

### SUMMARY OF THE INVENTION

In accordance with the present invention, a vertical axis windmill is provided, comprising: a generator, a shaft mounted to the generator, and a plurality of blade sets. A blade set comprises a blade rod rotatably connected to the shaft and carrying blades arranged on opposite sides of the shaft. Each blade is divided into first and second moment-inducing sections located on opposite sides of the blade rod. The first moment-inducing section is greater in area than the second moment-inducing section. Each blade is provided, at a predetermined location thereof, with a winglet. Stops for limiting the swiveling of the blade are arranged on the blade set. When the blade set is moved so that the blades thereof are located in a windward position and leeward position respectively, the blades are automatically and easily set in an optimum pressure-receiving condition and a least wind-resistance condition, respectively, for receiving wind energy from variable directions, so that the shaft is rotatable even with low wind speed to achieve optimum power generation performance. Further, no complicated swiveling structure is needed for the blade.

The foregoing object and summary provide only a brief introduction to the present invention. To appreciate fully these and other objects of the present invention as well as the invention itself, all of which will become apparent to those skilled in the art, the following detailed description of the invention and the claims should be read in conjunction with the accompanying drawings. Throughout the specification and drawings, identical reference numbers refer to identical or similar parts.

Many other advantages and features of the present invention will be manifested to those versed in the art upon making reference to the detailed description and the accompanying sheets of drawings, in which a preferred structural embodiment incorporating the principles of the present invention is shown by way of illustrative example.

### BRIEF DESCRIPTION OF THE DRAWINGS

The present invention will be apparent to those skilled in the art by reading the following description of preferred embodiments thereof, with reference to the attached drawings, wherein:
Figure 1 is a perspective view of a vertical axis windmill constructed in accordance with a preferred embodiment of the present invention;
Figure 2 is an exploded view of the vertical windmill of the present invention;
Figure 3 is an exploded view of a blade set of the vertical axis windmill in accordance with the preferred embodiment of the present invention;
Figures 4 and 5 are perspective views illustrating the operation of the vertical axis windmill of the present invention;
Figure 6 is a perspective view illustrating the first winglet of a blade of the blade set that receives wind pressure to swivel the blade upward;
Figures 7a, 7b, 7c illustrate the operation of the blades swiveling upward from a horizontal state to a vertical state;
Figure 8 schematically demonstrates the blade in a horizontal state receiving wind coming from a different direction to develop a lifting force;
Figure 9 is a perspective view illustrating the operation of the vertical axis windmill of the present invention;
Figures 10a, 10b, 10c illustrate the operation of the blades swiveling from a vertical state to a horizontal state;
Figures 11 and 12 are perspective views illustrating the operation of the vertical axis windmill of the present invention; and
Figure 13 is a perspective view illustrating a blade constructed in accordance with another embodiment of the present invention.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

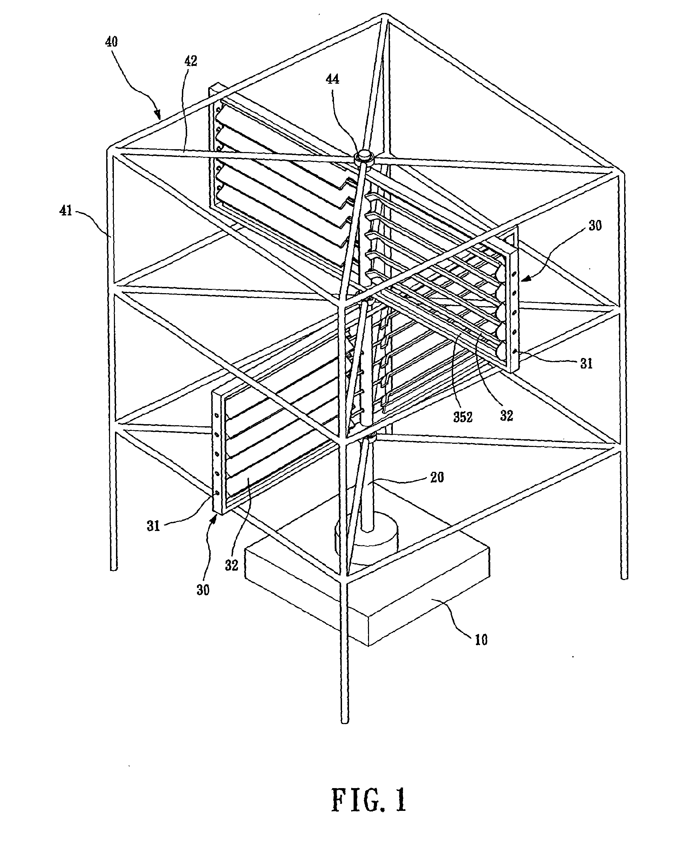

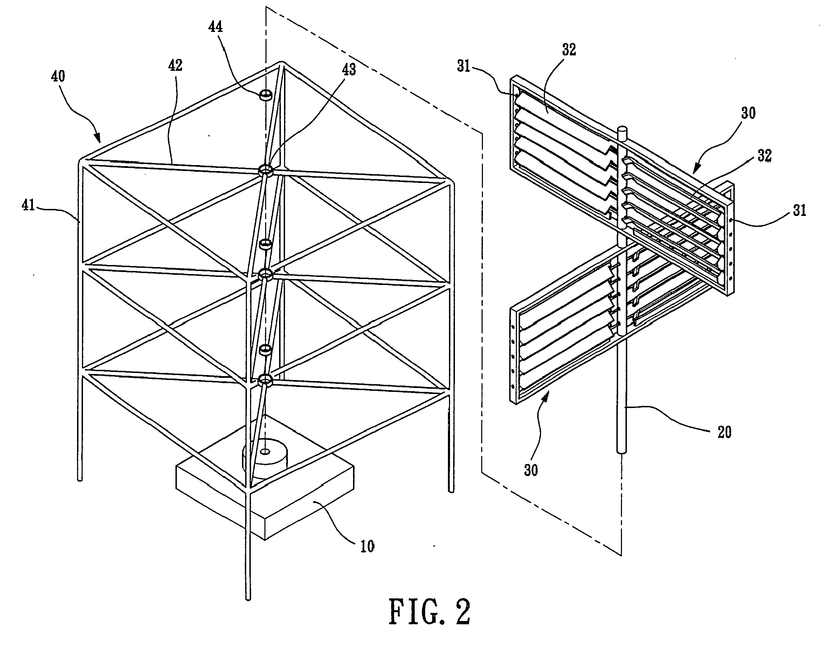

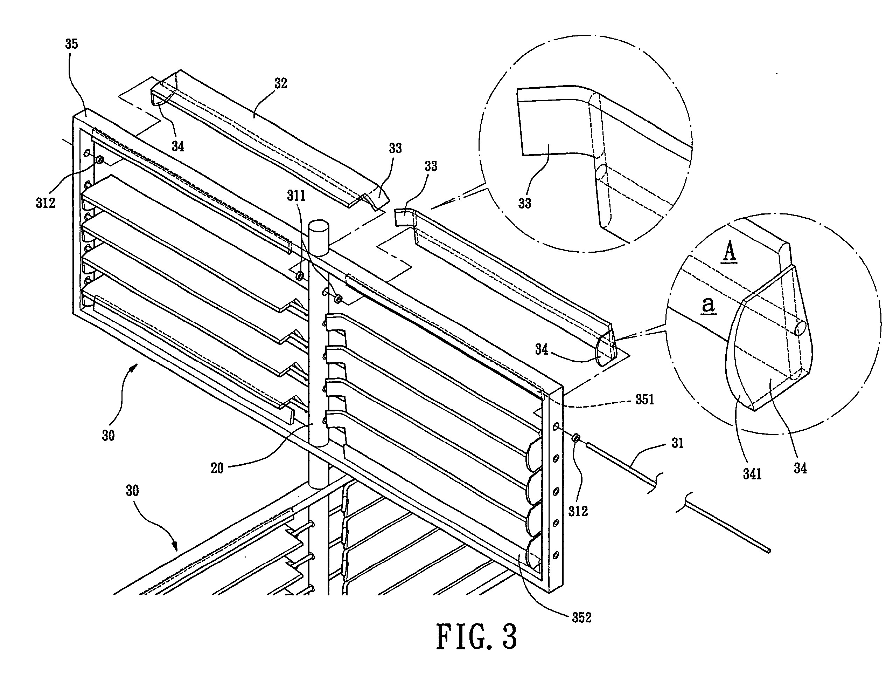

With reference to the drawings and in particular to Figures 1-3, a vertical axis windmill constructed in accordance with the present invention comprises a generator 10, a shaft 20 mounted on the generator 10, a plurality of blade sets 30, and a support frame 40. The blade set 30 comprises a plurality of blade rods 31 each carrying two blades 32 and rotatably mounted to the shaft 20, wherein the blades 32 are located on opposite sides of the shaft 20 and are provided with means for facilitating swiveling of the blades 32 so that the blades 32, which are respectively on windward side and leeward side, can be manipulated with aerodynamic force caused by air flows to automatically and easily set in an optimum pressure-receiving position and least wind-resistance position, respectively, for receiving of wind energy from variable directions and thus providing optimum power generation performance even in low wind speed conditions. A detailed description for a preferred embodiment of the present invention will be given as follows.

The generator 10 functions to convert rotary mechanical energy into electrical power.

The shaft 20 is mounted on the generator 10 and functions to drive the generator 10 for generation of power.

The blade sets 30 are arranged in such a way that an upper-level blade set and lower-level blade set, which are stacked together in an alternate manner to serve as a unitary module, are fixed to the shaft 20. If desired, either a single pair of upper-level and lower-level blade sets can be used or, alternatively, based on the local topography and wind field, one or more additional pairs of blade sets can be further stacked to increase power generation efficiency. The blade set 30 comprises a plurality of blade rods 31 rotatably mounted to the shaft 20 with bearings 311 arranged in the rotation connection to reduce the likelihood of damage or breakdown. Each blade rod 31 is provided with blades 32 on opposite sides of the shaft 20 and each blade 32 is divided into two moment-inducing sections on the opposite sides of the blade rod 31 with one moment-inducing section being greater in area than the other one. In other words, the surface area "A" of the section of the blade 32 above the blade rod 31 is greater than the surface area "a" of the section of the blade 32 that is below the blade rod 31. Preferably, the blade rod 31 is set at a location approximately two-thirds of the widthwise dimension of the blade 32 so that the surface area of two-thirds of the width of the blade 32, when facing windward, receive a wind pressure greater than the surface area of the remaining one-third of the width of the blade 32. When the blades 32 swivel to a substantially vertical state, the lower edge of each blade 32 engages with the upper edge of the blade 32 below. Each blade 32 has an inner end on which a first winglet 33 is formed at a preset internal angle to concentrate the incoming wind pressure and thus induce moment on the blade 32 for swiveling. The blade 32 also has an outer end forming a second winglet 34, which is substantially normal to the blade 32 for receiving wind pressure and preventing loss of wind pressure. Further, since the rotational axis of the blade 32 is not set at the geometric center thereof, a counterweight is selectively added to the lower surface section "a" of the blade below the blade rod 31 to set the center of gravity of the blade 32 at the rotational axis of the blade rod 31. This will set the blade 32 in a condition where the forces are balanced when the blade 32 is in a horizontal state and thus allowing the blade 32 to easily swivel, even when only being acted upon by the low wind pressure of a light breeze. The second winglet 34 has a portion configured as a lifting airfoil 341 similar to an airplane wing, serving to provide additional lifting force to help rotation of the shaft 20 in the situation where the blade 32 is rotated to a horizontal state. To enhance the stability and firmness of the blade rod 31, the blade set 30 comprises a frame 35 that rotatably supports the ends of the blade rods 31 with bearings 312 set at the rotation connections. Stops 351, 352 are formed at upper and lower internal edges of the frame 35 (or alternatively, the stops are formed on the shaft 20) to automatically stop the swiveling of the uppermost and lowermost blades 32 when they approach a vertical state, thereby fixing the blades.

The support frame 40, serving to support the shaft 20 in position, comprises a plurality of horizontal and vertical bars 41 that form a multi-level framework, each level containing diagonal bars 42 interconnecting each other at an intersection in which a bore 43 is defined to receive and retain a bearing 44 for the extension and rotation of the shaft 20.

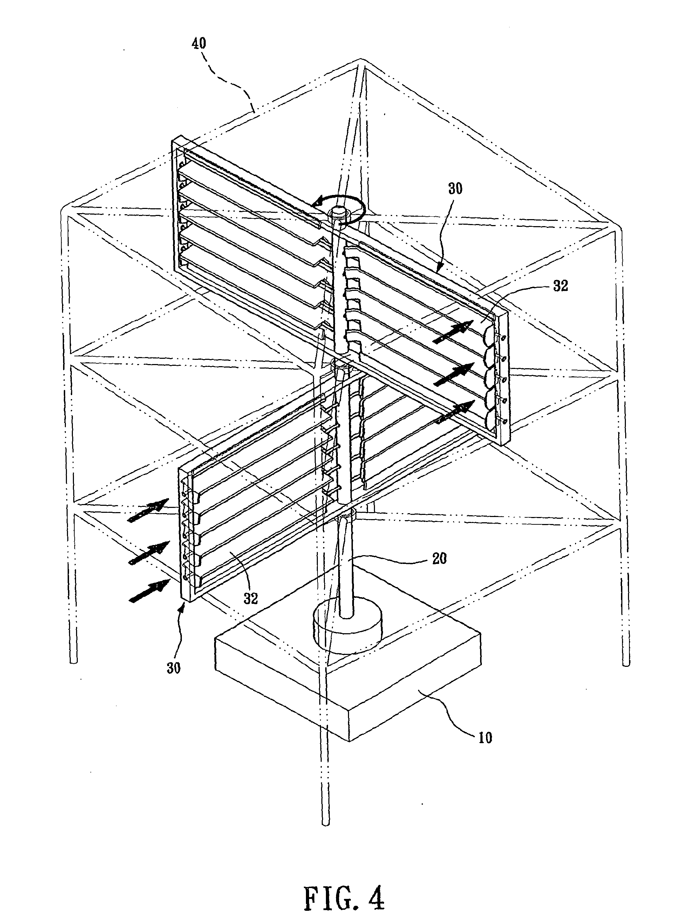

Also referring to Figure 4, when the windmill of the present invention is acted upon by wind, as indicated by the arrows, the blades 32 on one side of the upper-level blade set 30 are acted upon by the aerodynamic force of the wind to swivel automatically to a vertical state where the vertical blades 32 receive the greatest wind pressure, while the blades 32 on the other side of the upper-level blade set 30, also due to aerodynamic force, automatically swivel to a horizontal state, which is the state of the least wind resistance, so that the blade set 30 drives the shaft 20 to rotate in, for example, a counter-clockwise direction. At the same time, the lower-level blade set 30 is substantially parallel to the air flow of the wind thereby losing wind pressure (and thereby losing power), but the blades 32 on one side of the lower-level blade set 30 are in a horizontal state, getting ready to be acted upon by the aerodynamic force of the wind to start swiveling to a vertical state.

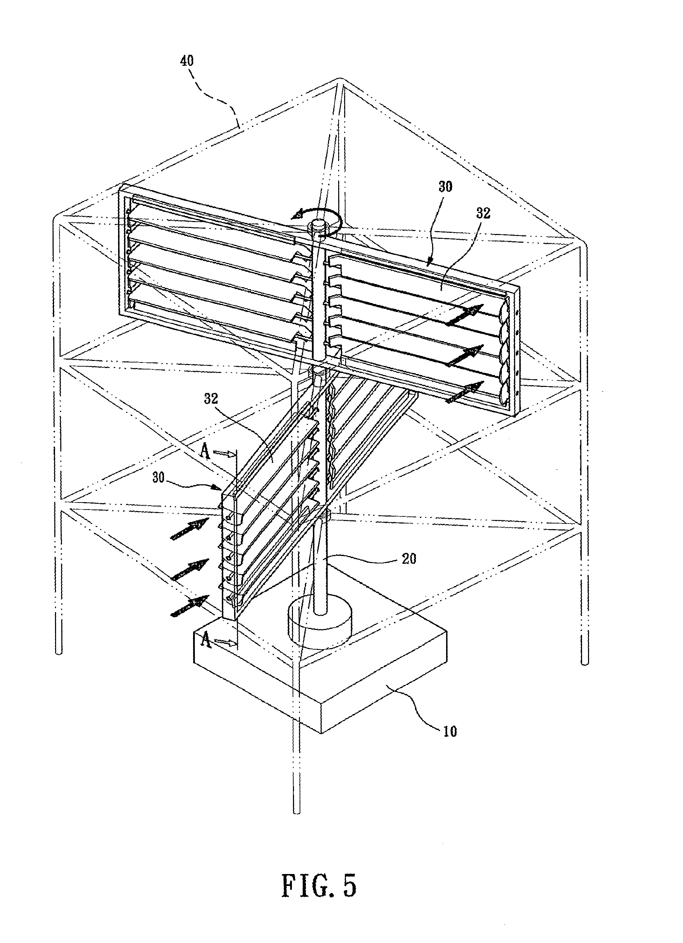

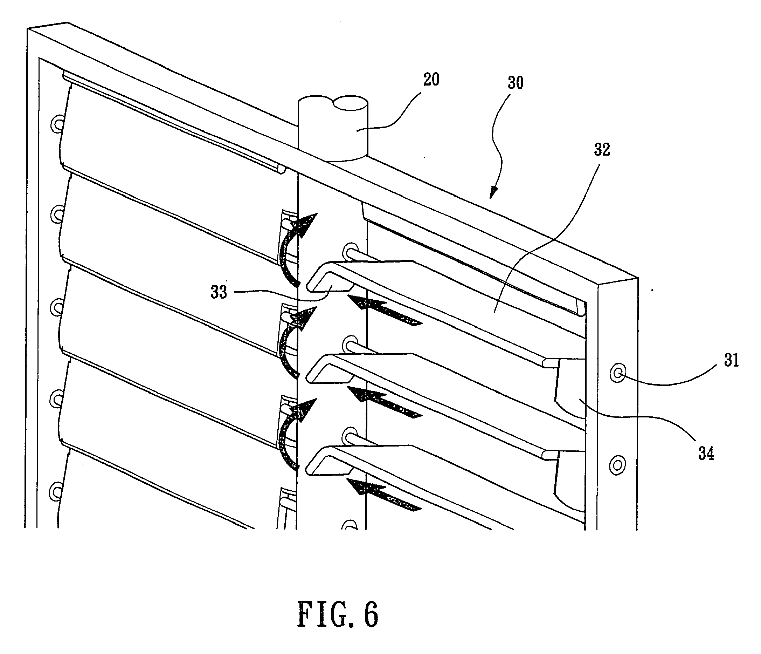

Also referring to Figures 5, 6, and 7, with the upper-level and lower-level blade sets 30 further rotating counter-clockwise, the blades 32 of the lower-level blade set 30 that are in a horizontal state ready to receive the action of the aerodynamic force of the wind (the blades 32 of the other side of the lower-level blade set 30 being in a vertical state) receive the incoming wind pressure with the first winglets 33 thereof. This, together with the fact that the surface area of the one section of the blade 32 on one side of the blade rod 31 is greater than that of the other section of the blade 32 on the other side of the blade rod 31, as well as the counterweight added to the blade 32, provides the blade 32 with enhanced moment acting thereon, allowing the blades 32 that are in a horizontal state to automatically and easily swivel upward. When the blades 32 swivel and approach a vertical state, the blades 32 engage and fix against each other with the uppermost and lowermost blades 32 being brought into contact with and automatically stopped and fixed by the stops 351, 352. At this time, the blades 32 together form a vertical surface that serves as an optimum wind-receiving surface which, with the aid of the second winglets 34, effectively receives the wind pressure for driving the rotation of the shaft 20.

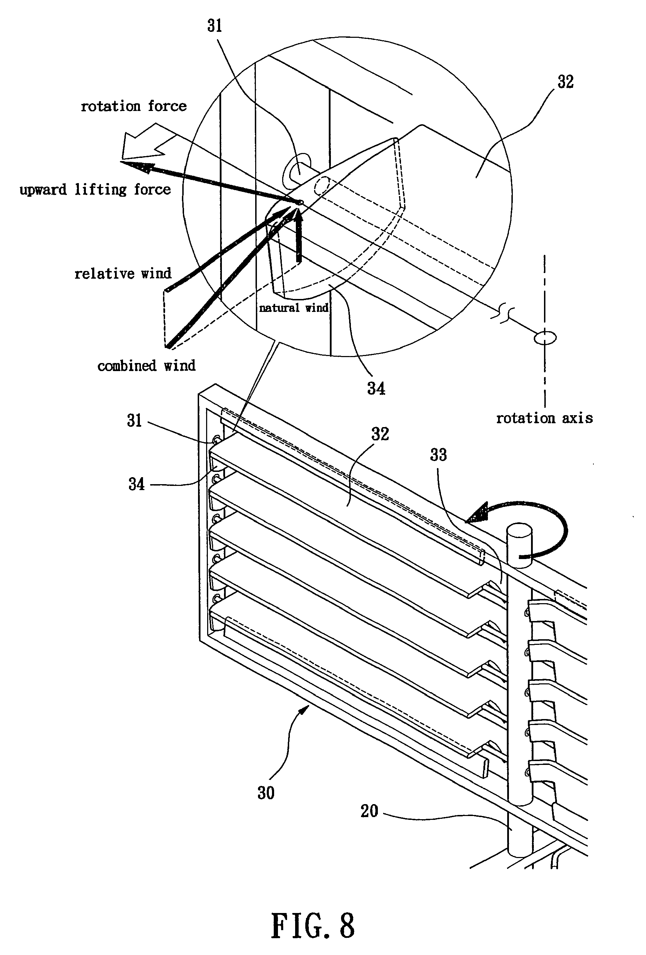

Referring to Figure 8, when the blades 32 on one side of the upper-level blade set 30 are in a leeward position, the blades can reduce the wind resistance due to the horizontal state thereof at that moment, and further, the second winglets 34 that at this moment are in a vertical state and extending downward so that the second winglets 34 can receive wind coming from a different direction and induce an upward lifting force according to the principles of aerodynamics to thereby generate a rotation force for assisting rotation of the blade set 30 about the shaft 20.

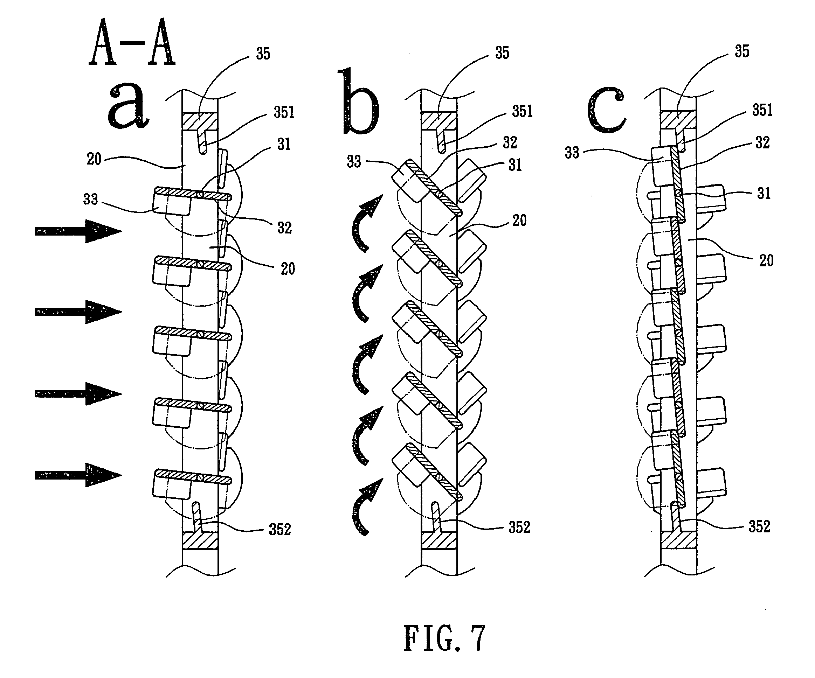

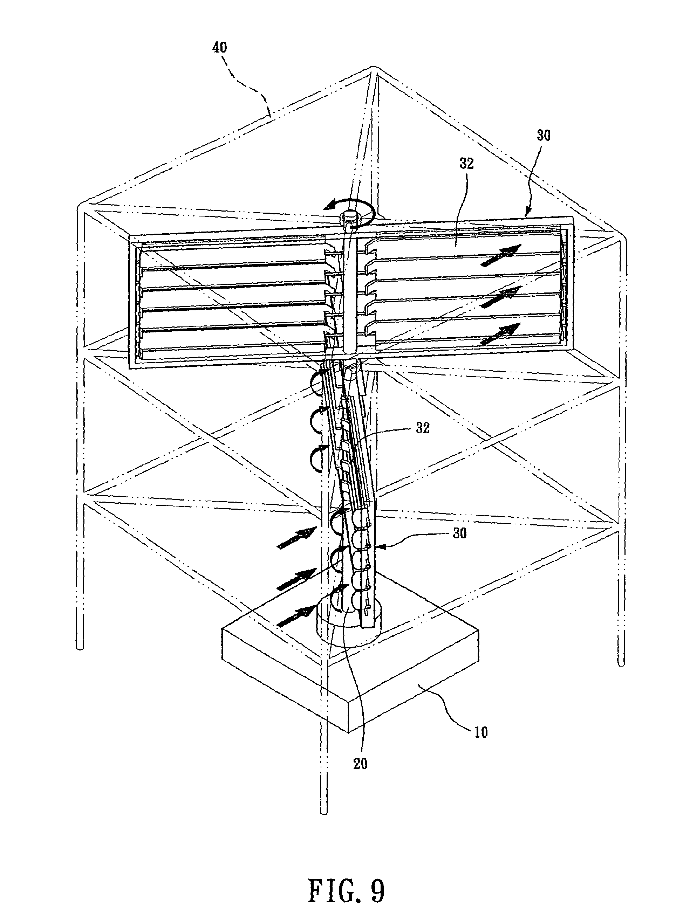

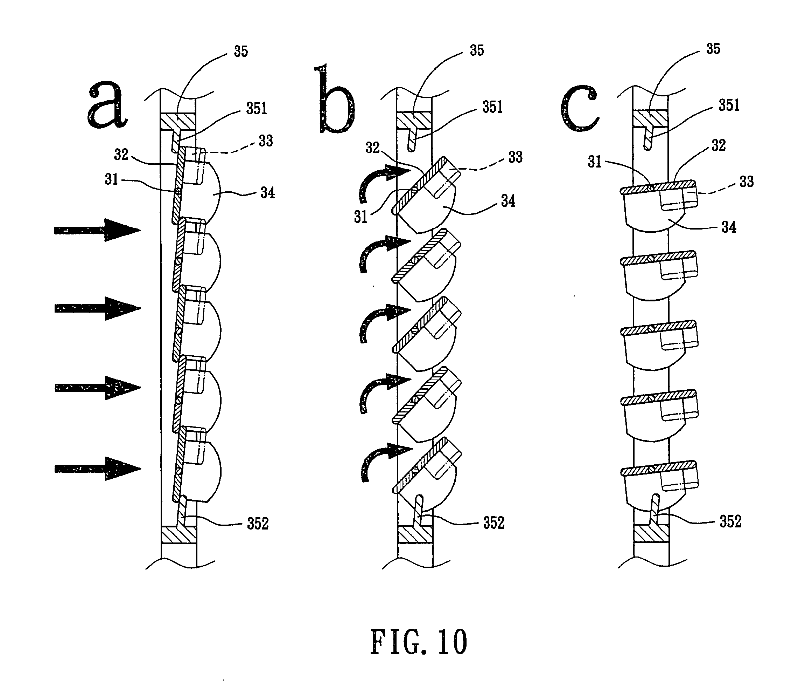

With reference to Figures 9 and 10, which demonstrate the operation of the windmill of the present invention succeeding that shown in Figure 7, when the blades 32 on one side of the lower-level blade set 30 start to receive wind pressure, swiveling to form a vertical surface, the blades 32 on the other side of the lower-level blade set 30 that were originally in a vertical state start to get to a leeward position. Since the surface area of one section of the blade 32 on one side of the blade rod 31 is greater than the other section, an enhanced moment is induced, which helps the blade 32 that is in a vertical state to easily swivel to a horizontal state, a less wind-resistant condition.

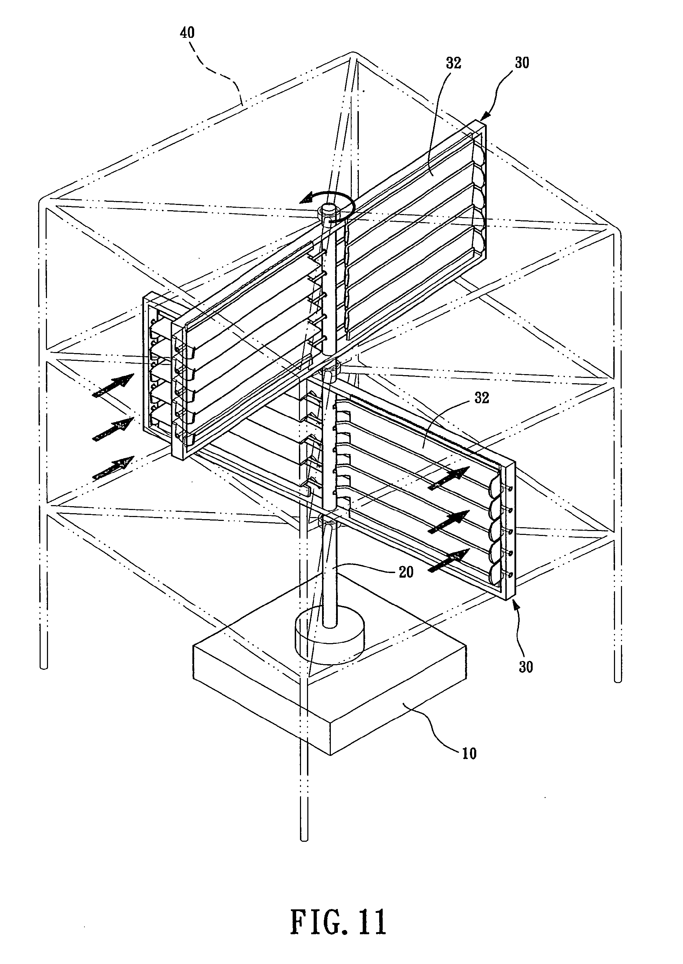

Referring to Figure 11, when the blades 32 of the side of the lower-level blade set 30 become vertical and are set to receive the greatest wind pressure, the blades 32 of the other side of the lower-level blade set 30 are located in a leeward position and provide the least wind resistance. At this moment, the upper-level blade set 30 is substantially parallel to the direction of air flow of the wind, thus losing wind pressure (losing power) and the lower-level blade set 30 succeeds the rotation force of the upper-level blade set 30.

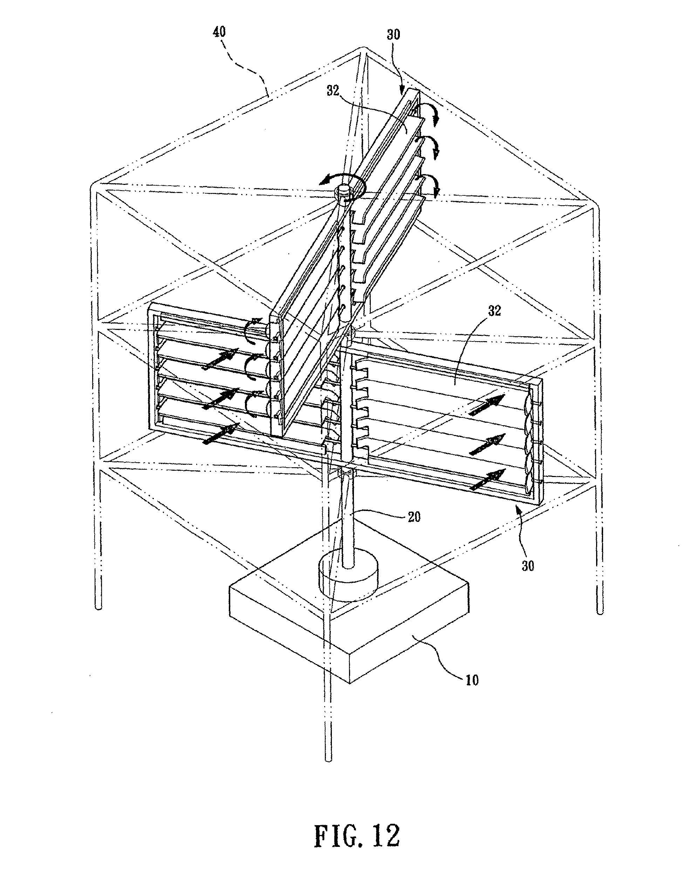

Referring to Figure 12, when the lower-level blade set 30 is acted upon by the wind to rotate further, the upper-level blade set 30 will be moved to a windward position again, causing the blades 32 on one side thereof, which were originally in a horizontal state, to swivel to a vertical state, while the blades 32 of the other side of the upper-level blade set 30, which were originally in a vertical state swivel to a horizontal state, whereby the upper-level blade set 30 succeeds the rotation. As such, wind energy from variable directions can be intercepted and optimum power generation performance can be ensured for rotating the shaft 20 to drive the generator 10 even at low wind speeds.

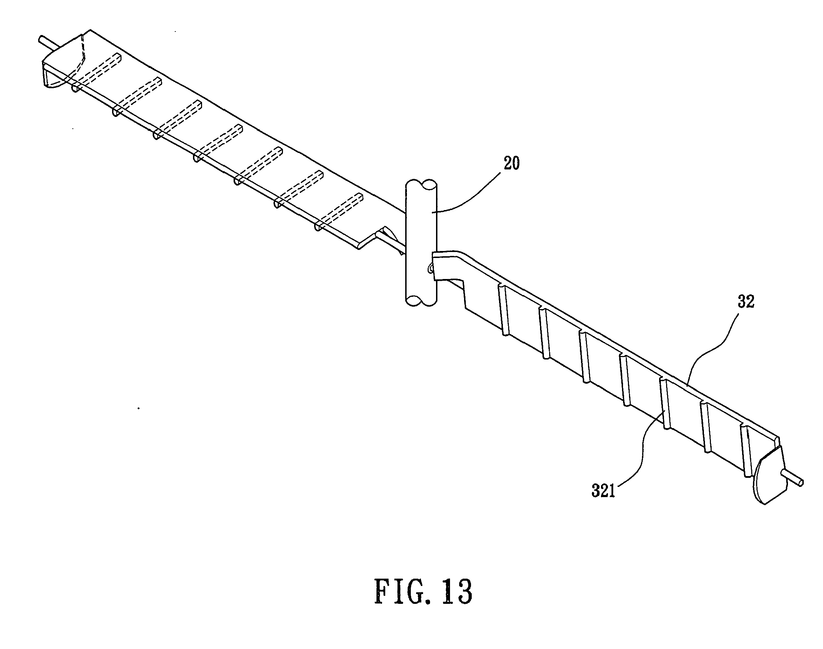

Referring to Figure 13, if desired, ribs 321 can be formed on the surface of the blade 32 to increase the structural strength thereof and also to help receive wind pressure.

## Claims

1. A vertical axis windmill, comprising:
a generator; and
a shaft mounted to the generator; and
at least one blade set mounted to the shaft;
wherein the blade set comprises at least one blade rod rotatably connected to the shaft and carrying blades arranged on opposite sides of the shaft, each blade being divided into first and second moment-inducing sections located on opposite sides of the respective blade rod with the first moment-inducing section being greater in area than the second moment-inducing section, each blade being provided, at a predetermined location thereof, with a first winglet forming a preset internal angle, stops for limiting swiveling of the blade being arranged on the blade set or the shaft, whereby when the blade set is moved so that the blades thereof are located in a windward position and a leeward position respectively, the blades are automatically and easily set in an optimum pressure-receiving position and a least wind-resistance position respectively for receiving wind energy from variable directions so that the shaft is rotatable even at low wind speeds to derive optimum power generation performance.

2. The vertical axis windmill as claimed in Claim 1, wherein the blade has a width, and wherein the blade rod is set at a location of two-thirds of the width of the blade.

3. The vertical axis windmill as claimed in Claim 1, wherein the blade has an outer end forming a second winglet for receiving wind pressure.

4. The vertical axis windmill as claimed in Claim 3, wherein the second winglet has a configuration of lifting airfoil.

5. The vertical axis windmill as claimed in Claim 1, wherein the blade is provided with a counterweight to set the center of gravity of the blade at the blade rod so as to allow the blade to easily swivel, even when the blade is only acted upon by low wind pressure in a light breeze.

6. The vertical axis windmill as claimed in Claim 1 comprising a plurality of pairs of blade sets that are stacked together.

7. The vertical axis windmill as claimed in Claim 1, wherein the blade has a surface on which ribs are formed to increase structural strength thereof and also to help receive wind pressure.

8. The vertical axis windmill as claimed in Claim 1 further comprising a support frame that supports the shaft, the support frame being composed of a plurality of horizontal and vertical bars that form a multi-level framework.

9. The vertical axis windmill as claimed in Claim 1 comprising a plurality of blade rods that are rotatably connected to the shaft, each carrying blades, and wherein when the blades are set in a substantially vertical state, each blade has a lower edge that engages an upper edge of a lower next blade.
It will be understood that each of the elements described above, or two or more together may also find a useful application in other types of methods differing from the type described above.
While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.
